# EUROPÄISCHE PATENTSCHRIFT

(11) **EP 0 358 806 B1**
(45) Veröffentlichungstag und Bekanntmachung des Hinweises auf die Patenterteilung: **17.03.1993**
(21) Anmeldenummer: 88115137.7
(22) Anmeldetag: 15.09.1988
(51) Int. Cl.: H02K 21/18, H02K 37/16, H02K 1/12

(54) **Selbstanlaufender Einphasen-Synchronmotor**
Self-starting single-phase synchronous motor
Moteur synchrone monophasé autodémarrant

(43) Veröffentlichungstag der Anmeldung: 21.03.1990
(73) Patentinhaber: SIEMENS AKTIENGESELLSCHAFT, 80333 München (DE)
(72) Erfinder: Altenbernd, Gerald, Dr.-Ing., D-3000 Hannover 91 (DE); Waehner, Ludwig, Dipl.-Ing., D-8700 Wuerzburg (DE)

(56) Entgegenhaltungen:
- EP-A- 0 001 334
- DE-A- 2 838 709
- DE-A- 2 938 072
- PATENT ABSTRACTS OF JAPAN, Band 4, Nr. 4 (E-164), 12. Januar 1980; & JP - A - 54 144 913

## Beschreibung

Die Erfindung bezieht sich auf einen selbstanlaufenden Einphasen-Synchronmotor gemäß Oberbegriff des Patentanspruchs 1; ein derartiger Einphasen-Synchronmotor ist aus der DE-Z.: "Feinwerktechnik und Meßtechnik" 87 (1979), H.4, S.163-169 bekannt.

Einphasen-Synchronmotoren der vorgenannten bekannten Art werden bei zweipoliger Ausführung üblicherweise in unsymmetrischer Bauart mit einem U-förmigen, an den Polenden geöffneten Statorblechschnitt ausgeführt. Die zuvor gewickelten Statorspulen werden von den freien Polenden her über die Schenkel der Pole aufgeschoben; aus diesem Grunde werden im allgemeinen bei einer zweipoligen Ausführung zwei getrennt gewickelte Statorerregerspulen vorgesehen, die je nach Dimensionierung anschließend parallel oder in Reihe geschaltet mit der äußeren Speisespannungsquelle verbindbar sind.

Ein derartiger Motor kann nur bei synchroner Drehzahl im Mittel Leistung abgeben. Trotz dieser Einschränkung ist ein selbständiger Anlauf möglich. Er erfolgt in Form eines Einschwingvorganges, bei welchem sich Drehrichtung, Geschwindigkeit solange wechselweise ändern, bis der synchrone Zustand erreicht ist. Auch das Drehmoment wechselt dabei ständig seine Richtung und Größe. Der stationäre Zustand wird abhängig vom Phasenwinkel der Spannung beim Einschalten unter Umständen erst nach mehreren Netzperioden erreicht. Dabei kann sich schließlich die positive oder die negative Drehrichtung als endgültige Drehrichtung einstellen.

Zwei Bedingungen müssen für einen selbständigen Anlauf und einen Hochlauf erfüllt sein. Der Motor muß beim Einschalten zunächst überhaupt in Bewegung kommen, muß danach im weiteren Verlauf der Bewegung innerhalb einer bestimmten Zeit in eine Drehrichtung so stark beschleunigt werden, daß er die synchrone Geschwindigkeit erreicht und auch weiterhin dem Statorfeld folgen kann.

Die erste Bedingung für einen selbständigen Anlauf wird üblicherweise durch zusätzliche Vorrichtungen mechanischer oder elektrischer Art erreicht. Als Vorrichtung elektrischer Art ist es bei einem selbstanlaufenden Einphasen-Synchronmotor der eingangs genannten Art bekannt, den Pol eines Einzelpols selbst eine unsymmetrische Form derart zu geben, daß der Luftspalt an gegenüberliegenden Stellen eines Polpaares vergrößert ist.

Durch die DE-PS 34 03 041 ist zu diesem Zweck z.B. ein Stufenpolverlauf für einen Polbogen mit unterschiedlicher Luftspaltweite, zwischen dem Polbogen und dem Rotorblech. Dies hat zur Folge, daß der dauermagnetische Rotor sich um einen Winkel γ gegenüber der Stellung verdreht, die er bei symmetrischen Polbögen einnehmen würde, bis er die Stellung erreicht hat, in welcher der magnetische Widerstand minimal wird. Beim Einschalten der Statorerregung übt dann das Statorfeld auf den dauermagnetischen Rotor ein Drehmoment solange aus, bis die beiden Felder parallel sind. Wird die Richtung des Statorfeldes zur rechten Zeit umgepolt und bewegt sich der Rotor infolge seiner kinetischen Energie geringfügig über diese Parallelstellung hinaus, so wird er wiederum eine halbe Umdrehung weiter beschleunigt usw.

Gemäß Aufgabe vorliegender Erfindung soll für einen selbstanlaufenden Einphasen-Synchronmotor auf konstruktiv sowie fertigungstechnisch einfache und trotzdem betriebssichere Weise eine verstärkte Anlaufhilfe und damit die Einsatzmöglichkeit für Antriebe mit hohem Anlaufwiderstandsmoment, insbesondere für Laugenpumpen, geschaffen werden.

Die Lösung dieser Aufgabe gelingt bei einem Einphasen-Synchronmotor der eingangs genannten Art durch die Lehre des Patentanspruchs 1; vorteilhafte Ausgestaltungen der Erfindung sind jeweils Gegenstand der Unteransprüche.

Die erfindungsgemäße Konstruktion eines selbstanlaufenden Einphasen-Synchronmotors erlaubt in fertigungstechnisch, insbesondere stanztechnisch einfach herstellbarer und trotzdem konstruktiv stabiler und betrieblich geräuscharmer Weise eine Vergrößerung des Winkels γ, um den der permanenterregte Rotor vor dem Einschalten der Statorerregung gegenüber deren Längsachse verdrehbar ist, bis auf 90° el, d.h. bis zur sogenannten Querachslage. Dadurch ist eine merkliche Erhöhung des auf den permanenterregten Rotor beim Einschalten der Statorerregung wirkenden Anlaufdrehmomentes erzielbar.

In fertigungstechnisch besonders einfacher und trotzdem hinsichtlich der Erhöhung des Anlaufdrehmomentes wirksamer Weise ist zur Erzielung der jeweils gewünschten Blechpaketengstellen das Statorblechpaket an seinen luftspaltabgewandten Außenseiten lediglich mit Ausstanzungen versehen, die im Bereich der Querachse eine solche Verengung des für einen Magnetfluß zur Verfügung stehenden, die Polhörner benachbarter Pole verbindenden Blechpaketquerschnitts ergeben, daß einerseits durch die Rotorerregung allein das Statorblechpaket in diesem Bereich noch nicht magnetisch sättigbar, jedoch bei eingeschalteter Ständererregung ein magnetischer Widerstand erreicht ist, der den Statorfluß an einem Nebenweg über den die Polhörner verbindenden Statorblechpaketteil hindert.

Da erfindungsgemäß die Blechpaketengstellen bzw. Luftspaltaufweitungen lediglich durch fertigungstechnisch einfache Ausstanzungen erreicht werden, kann durch deren Anzahl und Anordnung eine gezielte Anpassung des Betriebsverhaltens an verschiedene Betriebsanforderungen mit geringem Aufwand, jedoch in großer Variationsbreite erreicht werden.

Der erfindungsgemäße selbstanlaufende Einphasen-Synchronmotor kann entweder mit einem symmetrischen oder mit einem unsymmetrischen Blechschnitt des Statorblechpaketes ausgebildet sein; um trotz des vorgesehenen, über den Bohrungsumfang geschlossenen Blechschnittes eine einfache Aufbringung der Statorerregerwicklung gewährleisten zu können, ist im ersteren Fall eines symmetrischen Blechschnittes vorgesehen, daß das Statorblechpaket aus einem Pol-Blechpaketteil mit einem die Bohrung des Rotors enthaltenden Polteil mit zur Aufnahme von übersteckbaren Statorwicklungen vorgesehenen radialen Polhälsen und einem zweiten über die Polhälse aufsteckbaren ringförmigen Rückschlußjoch-Blechpaketteil und im Falle eines unsymmetrischen Blechschnittes aus einem U-förmigem Pol-Statorblechpaketteil mit einem die Bohrung des Rotors enthaltenden Grundschenkel und zwei zur Aufnahme von übersteckbaren Statorwicklungen vorgesehenen Seitenschenkeln sowie einem zwischen die freien Enden der Seitenschenkel des Pol-Blechpaketteils einsteckbaren Rückschlußjoch-Blechpaketteil zusammensetzbar ist.

Die Erfindung sowie weitere vorteilhafte Ausgestaltungen der Erfindung werden im folgenden anhand zweier schematisch dargestellter Ausführungsbeispiele in der Zeichnung näher erläutert; darin zeigen:
- FIG 1: den radialen Querschnitt durch einen Einphasen-Synchronmotor mit symmetrischem Blechschnitt des Statorblechpaketes;
- FIG 2: den radialen Querschnitt durch einen Einphasen-Synchronmotor mit unsymmetrischem Blechschnitt des Statorblechpaketes.

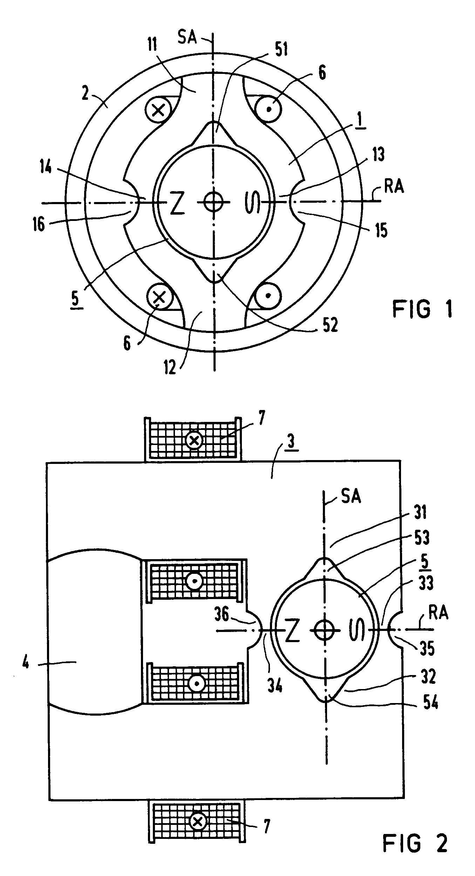

FIG 1 zeigt in einem radialen Querschnitt einen permanenterregten Einphasen-Synchronmotor mit symmetrischem Blechschnitt des Statorblechpaketes. Das Statorblechpaket setzt sich zusammen aus einem Pol-Blechpaketteil 1 mit einem ersten Einzelpol 11 und einem zweiten Einzelpol 12, deren Polspitzen an den freien Enden der Polhörner im Sinne eines geschlossenen Blechschnittes miteinander verbunden sind, und einem ringförmigen Rückschlußjoch-Blechpaketteil 2, das über die radial freien Enden der zuvor mit aufgesteckten Statorwicklungsspulen 6,6 versehenen Polhörnern der Pole 11,12 im Preßsitz überstülpbar ist.

Erfindungsgemäß weist das Pol-Blechpaketteil 1 in Richtung der durch die Erregung der Statorwicklungsspulen 6,6 gegebenen Statorfeldachse SA Luftspaltaufweitungen 51,52 des Luftspaltes 5 und in Richtung der zur Statorfeldachse SA um 90° el verschobenen Rotorfeldachse RA in Rotorruhestellung magnetische Blechpaketengstellen 13,14 auf. Die magnetischen Blechpaketengstellen 13,14 werden ebenso wie die Luftspaltaufweitungen 51,52 durch außenrandseitige bzw. luftspaltseitige Ausstanzungen des Pol-Blechpaketteils 1 erreicht; die außenrandseitigen Ausstanzungen des Pol-Blechpaketteils 1 zur Erzielung der gewünschten Engstellen 13,14 tragen die Bezugszeichen 15,16.

FIG 2 zeigt einen erfindungsgemäßen Einphasen-Synchronmotor mit unsymmetrischem Blechschnitt des Statorblechpaketes. Das Statorblechpaket besteht aus einem U-förmigen Pol-Blechpaketteil 3 und einem zwischen die freien Enden der Schenkel des Pol-Blechpaketteils 3 nach dem Überstecken von Statorwicklungsspulen 7,7 über die Seitenschenkel des Pol-Blechpaketteils 3 im Preßsitz eindrückbaren Rückschlußjoch-Blechpaketteil 4. In ähnlicher Weise wie in FIG 1 sind auch beim Ausführungsbeispiel gemäß FIG 2 in Richtung der durch als Erregung der Statorwicklungsspulen 7,7 im Grundschenkel des U-förmigem Pol-Blechpaketteils 3 gegebenen Statorfeldachse SA Luftspaltaufweitungen 53,54 und in der dazu senkrecht liegenden Rotorfeldachse RA in Rotorruhestellung Blechpaketengstellen 33,34 durch außenrandseitige Ausstanzungen 35,36 im Pol-Blechpaketteil 3 vorgesehen.

Der einen Nordpol N und einen Südpol S enthaltende permanenterregte Rotor ist in FIG 1 und FIG 2 in der Stellung eingezeichnet, die der Rotor aufgrund der vorgesehenen Luftspaltaufweitungen 51,52 bzw.53,54 bei nicht angeschlossenen Statorwicklungsspulen 6,6 bzw.7,7, d.h. noch nicht vorhandener Statorerregung einnimmt.

Beim Einschalten des Einphasen-Synchronmotors, d.h. beim Anlegen einer Speisespannung an die Statorwicklungsspulen 6,6 bzw.7,7 wird sich aufgrund der erfindungsgemäß vorgesehenen Blechpaketengstellen 13,14 bzw.33,34 ein Statorfeldverlauf einstellen, der im wesentlichen in Richtung der Statorfeldachse SA im Pol-Blechpaketteil 1 bzw.3 verläuft, aus dem Polbogen der Polhörner in den jeweiligen Luftspalt aus- bzw. eintritt und den permanenterregten Rotor N,S durchfließt. Ein Statorerregungsfluß über die Blechpaketengstellen kann dabei vollständig dadurch vermieden werden, daß die Ausstanzungen 15,16 bzw.35,36 und damit die Querschnittsflächen der Blechpaketengstellen 13,14 bzw.33,34 derart dimensioniert sind, daß aufgrund der alleinigen Rotorerregung zwar noch keine Sättigung im Bereich der Blechpaketengstellen eintritt, jedoch diese Sättigung beim Einschalten der Statorwicklungsspulen und damit vorhandenen Statorfeld erreicht ist.

## Patentansprüche

1. Selbstanlaufender Einphasen-Synchronmotor mit einem zumindest zweipoligen, insbesondere permanentmagnetisch erregten Rotor (N;S) und einem zumindest zwei Pole (11,12 bzw.31,32) aufweisenden Statorblechpaket (1,2 bzw.3,4) sowie mit einer aufgrund über den Bohrungsumfang veränderlicher Luftspaltweite im Einschaltzeitpunkt gegenüber der Statorfeldachse um einen Winkel γ verdrehten Rotorfeldachse, **gekennzeichnet** durch einen über den Bohrungsumfang geschlossenen Blechschnitt des Statorblechpaketes (1,2 bzw.3,4) mit zumindest jeweils einer magnetischen Luftspaltaufweitung (51,52 bzw.53,54) im Bereich der Polmitten der Pole (11,12 bzw.31,32) und zumindest jeweils einer derartigen magnetischen Blechpaketengstelle (13,14 bzw.33,34) im Bereich der polhornseitigen Polenden der Pole (11,12 bzw.31,32), daß das Statorblechpaket (1,2 bzw.3,4) in deren Bereich durch die Rotorerregung allein magnetisch unsättigbar, jedoch durch die zusätzliche Statorerregung sättigbar ist.

2. Selbstanlaufender Einphasen-Synchronmotor nach Anspruch 1, **gekennzeichnet** durch eine Anordnung der Luftspaltaufweitungen (51,52 bzw.53,54) in der Statorfeldachse (L) der Einzelpole (11,12 bzw.31,32) und eine Anordnung der Blechpaketengpässe (13,14 bzw.33,34) in einer 90° el zu der Ständerfeldachse (L) liegenden Querachse (Q).

3. Selbstanlaufender Einphasen-Synchronmotor nach Anspruch 1 oder 2, **dadurch gekennzeichnet**, daß die Blechpaketengpässe (13,14 bzw.33,34) durch randoffene Ausstanzungen an den luftspaltabgewandten Außenseiten des Statorblechpaketes (1,2 bzw.3,4) gebildet sind.

4. Selbstanlaufender Einphasen-Synchronmotor nach einem der Ansprüche 1 bis 3, **gekennzeichnet** durch einen symmetrischen Blechschnitt des Statorblechpaketes (FIG 1).

5. Selbstanlaufender Einphasen-Synchronmotor nach einem der Ansprüche 1 bis 3, **gekennzeichnet** durch einen unsymmetrischen Blechschnitt des Statorblechpaketes (FIG 2).

6. Selbstanlaufender Einphasen-Synchronmotor nach Anspruch 4, **dadurch gekennzeichnet**, daß das Statorblechpaket aus einem Pol-Blechpaketteil (1) mit einem die Bohrung des Rotors (N;S) enthaltenden Polteil mit zur Aufnahme von übersteckbaren Statorwicklungen (6;6) vorgesehenen radialen Polhälsen und einem über die Polhälse aufsteckbaren ringförmigen Rückschlußjoch-Blechpaketteil (2) zusammensetzbar ist.

7. Selbstanlaufender Einphasen-Synchronmotor nach Anspruch 5, **dadurch gekennzeichnet**, daß das Statorblechpaket aus einem U-förmigen Pol-Blechpaketteil (3) mit einem die Bohrung des Rotors (N;S) enthaltenden Grundschenkel und zwei zur Aufnahme von übersteckbaren Statorwicklungen (7;7) vorgesehenen Seitenschenkeln sowie einem zwischen die freien Enden der Seitenschenkel einsteckbaren Rückschlußjoch-Blechpaketteil (4) zusammensetzbar ist.

## Claims

1. Self-starting single-phase synchronous motor having an at least two-pole rotor (N;S), in particular with permanent magnet excitation, and a laminated stator core (1,2 and 3,4) having at least two poles (11,12 and 31,32), and having a rotor field axis rotated in the connection instant relative to the stator field axis by an angle γ due to air-gap width variation over the bore circumference, characterized by a sheet section of the laminated stator core (1,2 and 3,4) closed over the bore circumference with at least, in each case, magnetic air-gap widening (51,52 and 53,54) in the region of the pole centres of the poles (11,12 and 31,32) and at least, in each case, a narrow point (13,14 and 33,34) of the magnetic laminated core in the region of the pole-tip-side pole ends of the poles (11,12 and 31,32) such that the laminated stator core (1,2 and 3,4) in their region cannot be saturated by the rotor excitation merely magnetically, but can be saturated by the additional stator excitation.

2. Self-starting single-phase synchronous motor according to claim 1, characterized by an arrangement of the air-gap widenings (51,52 and 53,54) in the stator field axis (L) of the single poles (11,12 and 31,32) and an arrangement of the laminated-core narrow passes (13,14 and 33,34) in a transverse axis (Q) lying 90° el to the stator field axis (L).

3. Self-starting single-phase synchronous motor according to claim 1 or 2, characterized in that the laminated-core narrow passes (13,14 and 33,34) are formed by open-edge punch-outs at the outer sides of the laminated stator core (1,2 and 3,4) directed away from the air gap.

4. Self-starting single-phase synchronous motor according to one of claims 1 to 3, characterized by a symmetrical sheet section of the laminated stator core (Figure 1).

5. Self-starting single-phase synchronous motor according to one of claims 1 to 3, characterized by an unsymmetrical sheet section of the laminated stator core (Figure 2).

6. Self-starting single-phase synchronous motor according to claim 4, characterized in that the laminated stator core can be assembled from a pole laminated-core part (1) with a pole part containing the bore of the rotor (N;S) with radial pole necks provided for the incorporation of stator windings (6;6) which can be inserted above and an annular return-yoke laminated-core part (2) which can be attached by way of the pole necks.

7. Self-starting single-phase synchronous motor according to claim 5, characterized in that the laminated stator core can be assembled from a U-shaped pole laminated-core part (3) with a base limb, containing the bore of the rotor (N;S), and two side limbs provided for the incorporation of stator windings (7;7) which can be inserted above as well as a return-yoke laminated-core part (4) insertable between the free ends of the side limbs.

## Revendications

1. Moteur synchrone monophasé autodémarreur comportant un rotor au moins bipolaire (N;S), excité notamment par des aimants permanents, et un paquet de tôles statoriques (1,2,3 ou 4), qui comportent au moins deux pôles (11,12 ou 31,32), ainsi qu'un axe du champ du rotor décalé d'un angle γ par rapport à l'axe du champ du stator à l'instant du branchement, en raison d'une largeur d'entrefer variable sur le pourtour du perçage, caractérisé par une section de tôle, fermée sur le pourtour du perçage, du paquet de tôles statoriques (1,2,3,4) avec au moins respectivement un élargissement de l'entrefer magnétique (51,52 ou 53,54) dans la zone des centres des pôles (11,12 ou 31,32) et au moins respectivement une telle zone d'étranglement magnétique (13,14 ou 33,34) du paquet de tôles dans la zone des extrémités, situées au niveau des cornes polaires, des pôles (11,12 ou 31,32) que le paquet de tôles statoriques (1,2,3,4) ne peut pas être saturé magnétiquement dans sa zone par la seule excitation du rotor, mais peut être saturé magnétiquement par l'excitation supplémentaire du stator.

2. Moteur synchrone monophasé autodémarreur suivant la revendication 1, caractérisé par une disposition des élargissements (51,52 ou 53,54) de l'entrefer sur l'axe (L) du champ statorique des pôles individuels (11,12 ou 31,32) et par une disposition des zones d'étranglement (13,14 ou 33,34) des paquets de tôles, sur un axe transversal (Q) décalé de 90° électriques par rapport à l'axe (L) du champ du stator.

3. Moteur synchrone monophasé autodémarreur suivant la revendication 1 ou 2, caractérisé par le fait que les zones d'étranglement (13,14 ou 33,34) du paquet de tôles sont formées par des découpes ouvertes dans les bords au niveau des faces extérieures, tournées à l'opposé de l'entrefer, du paquet de tôles statoriques (1,2 ou 3,4).

4. Moteur synchrone monophasé autodémarreur suivant l'une des revendications 1 à 3, caractérisé par une découpe symétrique des tôles du paquet de tôles statoriques (figure 1).

5. Moteur synchrone monophasé autodémarreur suivant l'une des revendications 1 à 3, caractérisé par une découpe dissymétrique des tôles du paquet de tôles statoriques (figure 2).

6. Moteur synchrone monophasé autodémarreur suivant la revendication 4, caractérisé par le fait que le paquet de tôles statoriques est formé par la réunion d'un élément (1) du paquet de tôles polaires comportant un élément de pôle contenant le perçage du rotor (N;S) et équipé de cols polaires radiaux servant à loger des enroulements statoriques (6;6) enfichables en superposition, et une partie annulaire (2) du paquet de tôles de la culasse de retour, enfichable par-dessus les cols polaires.

7. Moteur synchrone monophasé autodémarreur suivant la revendication 5, caractérisé par le fait que le paquet de tôles statoriques est formé par la réunion d'une partie en forme de U (3) du paquet de tôles polaires, comportant une branche de base contenant le perçage du rotor (N;S), et deux branches latérales servant à loger des enroulements statoriques (7;7) pouvant être enfichés en superposition, ainsi que d'une partie (4) du paquet de tôles de la culasse de retour, qui peut être enfichée entre les extrémités libres des branches latérales.
